# EUROPEAN PATENT APPLICATION

(11) **EP 2 053 521 A1**
(43) Date of publication of application: **29.04.2009**
(21) Application number: 07807848.2
(22) Date of filing: 25.09.2007
(51) Int. Cl.: G06F 13/00

(54) **RECEIVING APPARATUS, TRANSMITTING/RECEIVING APPARATUS, MOBILE TERMINAL APPARATUS, TRANSMITTING METHOD, TRANSMITTING PROGRAM, TRANSMITTING/RECEIVING PROGRAM, AND COMPUTER-READABLE RECORDING MEDIUM**

(30) Priority: 14.11.2006 JP 2006308121
(71) Applicant: Sharp Kabushiki Kaisha, Osaka-shi, Osaka 545-8522 (JP)
(72) Inventor: TSUCHIYA, Shinichi, Chiba 290-0056 (JP)
(74) Representative: Müller - Hoffmann & Partner
(86) International application number: PCT/JP2007/068579
(87) International publication number: WO 2008/059664

(57) **Abstract**

The mail transmitting and receiving device (1) of the present invention transmits a mail to a recipient mail address to be entered. In the mail transmitting and receiving device (1), the input processing section (10) accepts an entry of the recipient mail address. Then, the address setting processing section (7) sets for a sender mail address of the mail, a mail address that is associated, in advance, with the recipient mail address thus accepted by the input processing section (10). This switches over a plurality of the transmission mail accounts, depending on a mail recipient.

## Description

### TECHNICAL FIELD

The present invention relates to a transmitting device, a transmitting and receiving device, a mobile terminal device, a transmitting method, a transmission program, a transmission and reception program, and a computer-readable recording medium, each of which is for data transmission in which information that identifies a sender and a recipient is designated.

### BACKGROUND ART

Growing popularity of the Internet use along advancement of a network technology has increased E-mail based daily communication. Meanwhile, terminals equipped with E-mail transmission and reception functions have prevailed among portable information terminals such as a portable phone and the like, thus such terminals are now being frequently used to facilitate communication among users.

The E-Mail is transmitted to a mail address of a recipient (user at a receiving side), which mail address is designated by a sender (user at a transmission side). The transmitted data is transmitted via a communication network such as the Internet, and ultimately received by a terminal used by the recipient. Since a sender mail address is attached to the E-mail, the E-mail recipient can identify from where the E-mail comes and reply thereto by designating the attached mail address.

Recently, many users switch over a plurality of mail addresses, depending on to whom they communicate. For example, they may switch over mail addresses according to which type of mail recipients mails are to be transmitted: such as close friends, not so close acquaintances, online service providers, and the like. Besides, further size reduction of a portable laptop personal computer (hereinafter referred to as PC) permits use of one laptop PC at home for personal E-mail communication as well as at an office for business E-mail communication.

Usually, users create, transmit and receive E-mail by MUA (Mail User Agent), i.e., Mailer (mail software). For example, the Outlook Express (®) is designed such that a user may register a plurality of usable mail addresses, so that the user can freely and manually select a sender mail address therefrom on a mail transmission and reception processing screen.

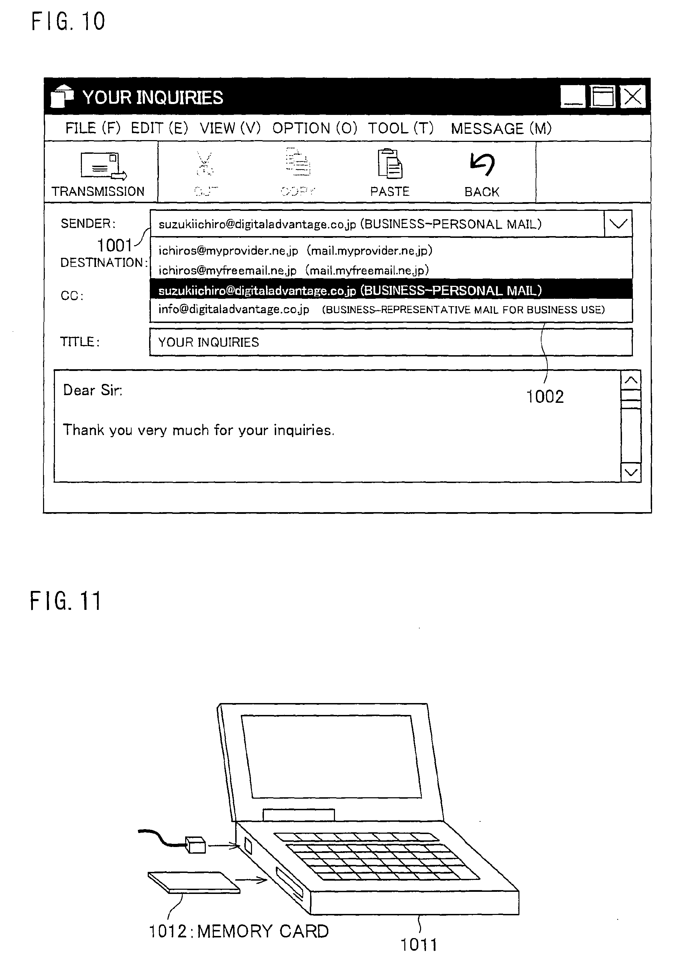

Fig.10 is a view illustrating an image in which a sender address is set, when transmission processing is carried out to transmit a mail prepared by the Outlook Express. As Fig. 10 shows, a user needs to manually select a sender address, i.e., a mail address to be set in a sender field 1001, out of a mail address list presented in a pull-down menu 1002. The mail addresses presented in the pull-down menu 1002 are registered in the Outlook Express by the user in advance.

Also, various techniques have been proposed, which techniques improve users' convenience in data communication such as E-Mail and the like.

For example, Patent Document 1 discloses a technique that allows a plurality of users to use an E-mail function of one terminal device with ease. Fig.11 shows a terminal device 1011 disclosed in the Patent Document 1. According to the Patent Document 1, users of the terminal device 1011 are respectively provided with memory cards 1012, which are external memory cards storing ISP (Internet Service Provider) information, E-mail account information, and the like. To use the E-mail function, the memory card 1012 is inserted into the terminal device 1011, and necessary information is read out from the memory card 1012. This eliminates the need for setting the users' E-mail account information and the like in the terminal device, thus allowing the plurality of the users to use network functions such as the E-mail and the like by simply inserting the memory card 1012 into the terminal device when they use the terminal device. Consequently, any users who have the memory card 1012 can use the E-mail function of the terminal device 1011 with ease.

Furthermore, Patent Document 2 discloses a technique that allocates a plurality of IP addresses to one MAC address and performs different applications with respect to each IP addresses. That is, when a server computer receives a processing request from a client, the technique disclosed in the Patent Document 2 makes it possible to assign the processing request to a server application associated with the IP address designated by the client. In other words, by associating the IP addresses with the applications respectively in advance, the technique disclosed in the Patent Document 2 causes the applications to be switched over, depending on the IP address to be designated.

Moreover, Patent Document 3 discloses a technique in which (i) determination of a data destination causes a greeting sentence to be put into the contents, which greeting sentence is associated with a classification of address data of the data destination; and then (ii) a data transmission is carries out. That is, the technique disclosed in the Patent Document 3 causes signatures registered in the MUA to be switched over depending on the mail address of the recipient; and then the mail transmission is carried out.
(Patent Document 1)
   Japanese Unexamined Patent Application publication "Tokukai 2000-330904 (published on November 30, 2000)"
(Patent Document 2)
   Japanese Unexamined Patent Application publication *"*Tokukai-hei 10-135982 (published on May 22, 1998)"
(Patent Document 3)
   Japanese Unexamined Patent Application publication *"*Tokukai-hei 11-85641 (published on March 30, 1999)"

### DISCLOSURE OF INVENTION

As described above, the conventional mail software is designed such that registration of a plurality of the mail addresses for the sender addresses requires a user to select a sender address out of the mail addresses in order to perform mail transmission.

The conventional arrangement requires the user to manually select the sender address each time he/she transmits a mail, which is associated with a risk that the user accidentally selects a wrong sender mail address.

Assume that the user uses the sender addresses selectively, depending on the transmission destination, and uses a private-use mail address only for close friends. If the user transmits a business-related mail or applies for a trial Internet service with the private-use mail address mistakenly selected, the private-use mail address will be known to a third party whom the user dose not want to know his/her private-use address.

The present invention is made in the view of the problem, and an object of the present invention is to provide: a transmitting device; a transmitting and receiving device; a portable terminal device; a transmitting method; a transmission program; a transmission and reception program; and a computer-readable recording medium; each of which is for data transmission in which a sender address suitable in accordance with a recipient mail address is selected.

In order to attain the object, a transmitting device in accordance with the present invention that is configured to transmit data to a recipient address entered in the transmitting device, includes: (i) recipient address inputting means configured to accept an entry of the recipient address; and (ii) sender address setting means configured to set as a sender address of the data, an address associated, in advance, with the recipient address thus accepted by the recipient address inputting means.

With this arrangement, the transmitting device in accordance with the present invention transmits data to an entered recipient address. That is, the recipient address identifying the recipient is designated at the time of data transmission. Designation of the recipient address is carried out by a user's input or the like, while acceptance of the entry of the recipient address is carried out by the recipient address inputting means. A recipient address is information for identifying a recipient at the time of the data transmission and reception that is carried out between terminals connected to a network such as the Internet. An example of such a recipient address encompasses a mail address and the like.

Further, in the data transmission, the transmitting device transmits data by attaching to the data, a sender address identifying a sender. Likely as the recipient address, a sender address is information that (i) identifies a sender at a recipient end and (ii) is designated as a destination, when the recipient replies to the sender by transmitting data. An example of such a sender address encompasses a mail address and the like.

The transmitting device in accordance with the present invention is arranged such that the sender address setting means sets for a sender address of the data to be transmitted, an address that is associated with the recipient address in advance. Association between the recipient address and the sender address should be established by, for example, storing the sender mail addresses in relationship to the respective recipient addresses in the recording medium in advance, which sender addresses are to be attached to the data whose destinations are set with recipient addresses. Then, designation of the recipient address causes the sender address setting means to, for example, (i) refer to the recording medium; (ii) acquire the address stored in relationship to the entered recipient address, in the recording medium; and (iii) set the thus acquired address for the sender address of the data to be transmitted.

The recording medium described in the exemplary association between the recipient address and the sender address may be not be limited to a particular arrangement, provided that information stored in the recording medium can be referred from the sender address setting means. Thus, the recording medium may be arranged in an integrated fashion with the transmitting device or arranged detachably with the transmission medium.

In the transmitting device in accordance with the present invention, this causes the sender address setting means to set the sender address to the transmitted data at the time of the data transmission, which in turn eliminates the user's need for manually and repeatedly selecting the sender address to be attached to the transmission data. Thus, user's convenience increases in the data transmission in which the destination is designated. Examples of such data transmission encompass the E-mail communication and the like.

Further, the sender addresses shall be switched over such that some of them are used selectively for private use while others are used selectively for business use. This generates the need for selecting a sender address suitable in accordance with the recipient address designated as the destination. Elimination of the user's need, however, for manually and repeatedly selecting the sender mail address decreases generation of errors that an unsuitable sender mail address is set to the transmitted data. Such an error occurs when the mail address allocated for private use is selected for transmitting a business-related mail.

A transmitting method in accordance with the present invention that is configured to transmit data to the recipient address entered, includes the steps of: (i) accepting the recipient address and (ii) setting as a sender address of the data, an address that is associated, in advance, with the recipient address thus accepted by the recipient address inputting means.

This arrangement attains a same effect as attained by the transmitting device in accordance with the present invention.

It is preferable that the transmitting device in accordance with the present invention is arranged such that (i) at least one piece of information on a day of the week, a date, and a clock time is associated with the addresses and that (ii) the sender address setting means is configured to (a) select the address associated to the at least one piece of information on a day of the week, a date, and a clock time on/at which the recipient address is designated, out of the addresses associated, in advance, with the recipient address accepted by the recipient address inputting means; and (b) set as the sender address, the address thus selected.

With this arrangement, the addresses are associated with the at least one piece of information on a day of the week, a date, and a clock time. For example, some addresses are associated with information on Saturday and Sunday while others are associated with information on Monday to Friday. This associates different addresses with one transmission destination address between Saturday / Sunday and Monday to Friday. Likely, this associates different addresses with one transmission destination address between nighttime and daytime.

Then, the sender address setting means sets the address for the sender address by selecting the address corresponding to the at least one of information on a day of the week, a date, and a clock time on/at which the recipient address is designated, out of the addresses associated, in advance, with the recipient address accepted by the recipient address inputting means. For example, if two addresses, one of which is used during nighttime while the other is used during daytime, are associated with the recipient address, the sender address setting means selects the address used during nighttime so as to set the address for the sender address, if the mail transmission is carried out at night.

The transmitting device is not limited to a particular arrangement. Thus, the transmitting device may be provided with a calendar or a clock so as to acquire information on temporal conditions in which a recipient address is designated. Alternately, the transmitting device may also be arranged so as to acquire the information by referring to an external calendar or clock. This allows, for example, the mail addresses to be switched over, depending on whether the mail transmission should be carried out during business hours or should be carried out during personal time, with respect to a same recipient. That is, even if the same recipient addresses are designated, this attaches suitable sender addresses to the transmission data, according to information on a day of the week, a date, and a clock time. This attachment of the sender address is carried out without the presence of the user who manually switches over the mail addresses. Thus, the user's convenience increases.

It is preferable that the transmitting device in accordance with the present invention is arranged such that the sender address setting means is configured to (i) select an address in association with a location in which the transmitting device accepts a designation of the recipient address, out of the addresses associated with recipient address according to positional information; and (ii) set as the sender address, the address thus selected.

With this arrangement, the sender address setting means sets the sender address by selecting, according to the location information, an address corresponding to the location at which the transmitting device is being used when the recipient address is designated, out of the plurality of addresses associated with the recipient address. The location of the transmitting device may be detected by referring to a base station to which the transmitting device is connected during communication. Alternately, the location of the transmitting device may also be detected with use of RFID or a positioning system such as GPS or the like. In this regard, the present invention is not limited to a particular arrangement. Thus, in addition, information on network to which the transmitting device is connected may be used as the location information, and the sender addresses are set accordingly. This allows, for example, the sender addresses to be switched over with respect to the same recipient, depending on whether the mail transmission is carried out at an office or carried out at home. That is, even if the same transmission destination addresses are designated, the sender addresses suitable for the transmission data are attached, based on the location of the transmitting device. This attachment of the sender address is carried out without the presence of the user who manually switches over the mail addresses. Thus, the user's convenience increases.

It is preferable that the transmitting device in accordance with the present invention further includes (i) address inputting means configured to accept an entry of another address different from the address and (ii) the sender address setting means configured to set as the sender address of the data, the another address thus accepted by the address inputting means, instead of the address.

With this arrangement, the address inputting means accepts the entry of the another address and the sender address setting means sets for the sender address of the data, the another address thus accepted, instead of the address. The address inputting means may be arranged such that, for example, the user can directly enter a sender address. Alternately, the address inputting means may also be arranged such that the user selects the sender address out of sender addresses that (i) are registered in advance and (ii) are shown in a pull-down menu. In this regard, the present invention is not limited to a particular arrangement. Such arrangements allow the users to switch over the sender addresses of the transmission data, if necessary.

It is preferable that the transmitting device in accordance with the present invention further includes notifying means configured to notify the user when the sender address setting means sets, instead of the address, the another address for the sender address of the data.

With this arrangement, the notifying means notifies the user when the sender address setting means sets, instead of the address, the another address for the sender address. A notifying section notifies the user that the sender address thus set is different from the address usually set for the sender address, by displaying the sender address in a color and/or font different from an ordinary color and/or font; by displaying a message; or by audio, for example. This allows the user to recognize that the set sender address is different from the sender address usually set.

It is preferable that the transmitting device in accordance with the present invention further includes address recording means configured to associate the another address with the recipient address, when the sender address setting means sets, instead of the address, the another address for the sender address of the data.

With this arrangement, the address recording means records the another address in association with the transmission destination address, when the sender address setting means sets, instead of the address, the another address for the sender address of the data. Accordingly, for example, once the user enters or designates the another address for the sender address, the another address is subsequently set as the sender address, in response to the entry of the transmission destination address.

It is preferable that the transmitting device in accordance with the present invention is arranged such that if the recipient address inputting means accepts the entries of the plurality of the recipient addresses, the sender address setting means sets as the sender addresses, the addresses associated with the recipient addresses in advance, with respect to each of the recipient addresses.

With this arrangement, when the recipient address inputting means accepts the entries of the plurality of the recipient addresses, the sender address setting means sets for the sender addresses, the addresses associated with the recipient addresses in advance, with respect to each of the recipient addresses. This attaches suitable sender addresses to the transmission data, depending on the recipient addresses, without the presence of the user who designates the sender mail addresses respectively.

It is preferable that the transmitting device in accordance with the present invention is arranged such that if the recipient address inputting means accepts the entries of the plurality of the recipient addresses, the sender address setting means sets, uniformly as the sender addresses of the data that are to be transmitted to the recipient addresses, any one of the addresses associated with the recipient addresses in advance.

With this arrangement, if the recipient address inputting means accepts the entries of the plurality of the recipient addresses, the sender address setting means sets, uniformly as the sender addresses of the data to be transmitted to the recipient addresses, any one of the addresses associated with the recipient addresses in advance.

The method for selecting any one of the addresses is not limited to a particular method. Thus, the sender address may be set by (i) prioritizing the recipient addresses in advance; and (ii) attaching to the data to be transmitted to the respective transmission destinations, the address associated with the recipient address of the highest priority. Alternately, the sender address may also be set by (i) prioritizing the sender addresses in advance; and (ii) attaching to the data to be transmitted to the respective transmission destinations, the sender address of the highest priority. In addition, if, for example, one mail addresses is set as the recipient address in an address filed (To), while other addresses are set as the recipient addresses in a Carbon copy, (CC) field, and a Blind Carbon copy (BCC) field, a sender address associated with the mail address to be set as the recipient address in the address field shall be attached to the data to be transmitted to transmission destinations designated by the addresses in CC and BCC fields. This allows one sender address to receive all of the return mails, the return mails are made to the transmitted data that have been transmitted to the plurality of the destinations one at a time. Thus, it is possible, for example, to organize mail retrieval servers (Post Office Protocol server, POP server) for retrieving the return mails, into one unit.

It is preferable that the transmitting device in accordance with the present invention is arranged such that if no sender address is associated with the entered recipient address in advance, the sender address setting means sets as the sender address, a predetermined sender address that is set as a default sender address in advance.

With this arrangement, if no sender address is associated with the entered recipient address in advance, the sender address setting means sets as the sender address, the predetermined sender address that is set as the default sender address in advance. The predetermined sender address is an address set as a default, independently from association between the recipient addresses and the sender addresses. This causes such predetermined sender address to be set, even when no recipient address is associated with the designated recipient address in advance. In turn, this eliminates the user's need for manually selecting the sender address. Therefore, the user's convenience increases, decreasing the user's errors in designation of the sender address.

It is preferable that the transmitting device in accordance with the present invention is arranged such that if no sender address is associated with the entered recipient address in advance, the sender address setting means sets as the sender address of the data, a sender address that was set to data that were previously transmitted to the recipient address.

With this arrangement, if no sender addresses is associated with the entered recipient address in advance, the sender address setting means sets for the sender address of the data, a sender address that was set to the data that were transmitted to the same recipient address by the transmitting device. That is, according to the transmitting device in accordance with the present invention, for example, (i) a history of the data transmitted by the transmitting device in the past is recorded as a data transmission history in a recording device or the like; and (ii) the sender address setting means searches the data transmission history for the past data. This eliminates the user's need for manually selecting the sender address, even when no sender address is associated with the designated recipient address in advance. Thus, the user's convenience increases, decreasing the user's errors in designation of the sender address decreases.

It is preferable that the transmitting device in accordance with the present invention further includes network connection setting means configured to set a network connection of the transmitting device, according to setting information on the network connection, which setting information is associated with the recipient address in advance.

With this arrangement, at the time of data transmission, designation of the recipient address identifying the recipient causes the network connection setting means to set the network connection, according to the setting information on the network settings associated, in advance, with the respective sender mail address. For example, in a case where a portable laptop is used at home, at an office, and the like, a mail to a friend is transmitted at home while a business-related mail are transmitted only from the office. Thus, the settings of the network connection of the PC can be switched over so as to connect to the network at home and so as to connect to the network at the office. This enables it, without the presence of the user who manually switches over the settings, to switch over the settings of the network connection, depending on the recipient address of the data. Therefore, the user's convenience increases.

It is preferred that the transmitting device in accordance with the present invention further includes the network connection setting means configured to set the network connection of the transmitting device, according to setting information on the network connection, which setting information is associated with the sender address in advance.

With this arrangement, at the time of data transmission, the network connection setting means sets the network connection of the transmitting device, according to the setting information on the network connection associated with the sender address, which sender address are set by the designation of the recipient addresses. For example, in the case of the sender address that is used at an office, the setting of the network connection of the PC can be switched over to a setting connectable to the network at the office, while in the case of the sender address for private use, the setting of the network connection of the PC can be switched over to a setting connectable to the network at home.

This allows the settings of the network connection to be switched over, (i) according to the sender address of the data and (ii) without the presence of the user who manually switching over the settings. Accordingly, the user's convenience increases.

It is preferable that the transmitting device in accordance with the present invention further includes transmission history displaying means configured to display a data transmission history, which transmission history displaying means is capable of varying display manners of the data transmission history per sender address.

With this arrangement, the transmission history displaying means varies the display manners of the data transmission history for the respective sender addresses. The transmission history displaying means may be arranged, for example, so as to display, on data transmission history, icons indicative of sender addresses. As an alternative, the transmission history displaying means may be arranged so to display the data transmission history in different colors for the respective sender address. In this regard, the present invention is not limited to a particular arrangement.

This allows the user to recognize the sender address in the data transmission history with ease.

It is preferable that the transmitting device in accordance with the present invention further includes signature putting means configured to put a signature into the data when the data are to be transmitted, which signature is associated with the sender mail address.

With this arrangement, the signature putting means puts the signatures into the data to be transmitted, depending on the sender addresses.

This eliminates the user's need for manually entering and/or manually selecting signature to the respective transmission data, thereby increasing the user's convenience.

It is preferable that the transmitting device in accordance with the present invention further includes password entry requiring means configured to prompt the user to enter a password, when the recipient address inputting means accepts the entry of the recipient address, which password (i) is associated with the address being set as the sender address and (ii) identifies a right to use the address.

With this arrangement, when the recipient address inputting means accepts the entry of the recipient address, i.e., when the user enters the recipient address, the password entry requiring means requires the entry of the password that is set to the respective sender addresses.

This requires the user to enter the password when he/she sets the sender address, resulting in prevention of unauthorized use and increased security.

It is preferable that the transmitting device in accordance with the present invention further includes the recipient address displaying means configured to display the recipient address, which recipient address displaying means is capable of varying display manners of the recipient addresses per sender address associated with the recipient addresses.

With this arrangement, the recipient address displaying means varies the display manners of the recipient addresses for the respective sender addresses associated with the recipient addresses. The recipient address displaying means may be arranged, for example, so as to display icons indicative of the sender addresses per recipient address. As an alternative, the recipient address displaying means may also be arranged so as to display the recipient addresses in different colors per sender address. In this regard, the present invention is not limited to a particular arrangement.

This allows the user to readily recognize the sender addresses associated with the respective recipient addresses.

It is preferable that the transmitting and receiving device in accordance with the present invention includes the transmitting device and receives data to which the sender address is set as the destination.

That is, the transmitting device may be arranged as the transmitting and receiving device in an integrated fashion with a device provided with a data reception function. However, the transmitting and receiving device is not limited to the above arrangement which includes the transmitting device configured independently as hardware. Alternately, the transmitting and receiving device may also include the transmitting device (i) that is realized by a CPU and software and (ii) operates as one function of the transmitting and receiving device.

It is preferable that the transmitting and receiving device in accordance with the present invention further includes informing means configured to inform the data reception, which informing means is capable of varying informing manners per sender address designated as the destination of the received data.

With this arrangement, the informing means informs the data reception in the different manners per sender address designated for the destination of the received data. For example, the informing means informs the data reception by ringing tone and/or vibrating alert, depending on the sender address to be used.

At the time of the data reception, this allows the user to readily recognize, by the informing, to which sender address (i.e., account) the data is transmitted.

It is preferable that the transmitting and receiving device in accordance with the present invention further includes reception history displaying means configured to display a data reception history, which reception history displaying means is capable of varying display manners of the data reception history per sender address designated as the destinations of the received data.

With this arrangement, the reception history displaying means varies the display manners of the data reception history per sender address designated as the destinations of the received data.

This allows the user to readily recognize to which sender address (i.e., account) the data reception history is displayed.

It is preferable that the transmitting and receiving device of the present invention further includes reception data transferring means configured to transfer the received data to a storing region that is associated, in advance, with the sender address designated as the destination of the received data.

With this arrangement, the reception data transferring means transfers the received data to the storing region allocated to the respective sender address designated as the transmission destination.

This eliminates the user's need for manually selecting with respect to the respective sender address, the storing region into which the received data is transferred, thereby increasing the user's convenience.

It is preferable that the transmitting and receiving device in accordance with the present invention that includes a transmitting device as set forth in claim 1 and receives via the mail server, data to which the sender address is designated as the destination, includes receiving means configured to (i) access to the mail server at intervals predetermined for the sender address designated as the destination and to (ii) carry out the data reception process to receive the data transmitted thereto.

With this arrangement, the transmitting and receiving device (a) includes the transmitting device and (b) receives via the mail server, the data to which the sender address is set as the destination. Then, the receiving means (i) accesses to the mail server at the intervals predetermined for the respective sender mail address designated as the destination; and (ii) carries out the data reception processing to receive the data transmitted to the transmitting and receiving device.

This eliminates the user's need for manually commanding execution of the data reception processing, thereby increasing the user's convenience.

It is preferable that the mobile terminal device in accordance with the present invention includes the transmitting device.

With this arrangement, the mobile terminal device includes the transmitting device.

In the mobile terminal device in accordance with the present invention, this causes the sender address setting means to set the sender address to the data to be transmitted, at the time of the data transmission, thereby eliminating the user's need for manually and repeatedly selecting the sender address attached to the data to be transmitted. Thus, the user's convenience increases in the data transmission in which destinations are designated. An example of such data transmission includes the E-mail communication.

The transmitting device and the transmitting and receiving device may be realized by a computer. In this case, the scope of the invention also encompasses a transmission program and a transmission and reception program that cause a computer to operate as the various means of the transmitting device and the transmitting and receiving device so as to realize these devices by the computer. The scope of the invention also encompasses a computer-readable recording medium that reads the transmission program and the transmission and reception program.

For a fuller understanding of the nature and advantages of the invention, reference should be made to the ensuing detailed description taken in conjunction with the accompanying drawings.

### BRIEF DESCRIPTION OF DRAWINGS

Fig. 1 is a block diagram showing a main configuration of a mail transmitting and receiving device in accordance with the present invention.
Fig.2 shows images in which the mail transmitting and receiving devices in accordance with the present invention transmit mails by setting sender addresses associated with recipients. Fig.2a is an image in which a mail transmitting and receiving device 1a embodied as a PC transmits mails, while Fig.2b is an image in which a mail transmitting and receiving device 1b embodied as a mobile terminal device transmits mails.
Fig.3 is an image of a display screen for the mail transmission, in which an entry of a recipient mail address by a user sets a sender mail address.
Fig.4 is a table showing mail addresses registered in an address book stored in the address storing section.
Fig.5 is a flow chart, illustrating a process flow in which the mail transmitting and receiving device in accordance with the present invention carries out mail transmission.

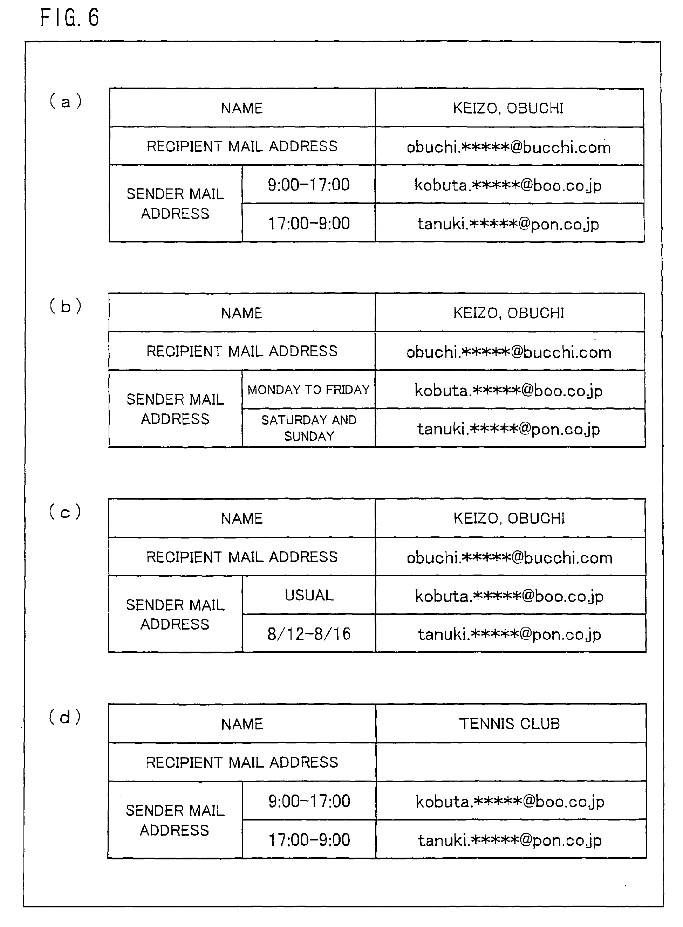

Fig.6 shows tables for illustrating address books in which sender mail addresses are registered in association with the recipient mail addresses or groups, in consideration with temporal conditions, in the transmitting and receiving device in accordance with the present invention. Fig.6(a) is a table showing an address book in which the sender mail addresses are registered in association with the recipient mail address according to periods of time. Fig.6(b) is a table showing an address book in which the sender mail addresses are registered in association with the recipient mail address, according to days of a week. Fig.6(c) is a table showing an address book in which the sender mail addresses are registered in association with the recipient mail address, according to dates. Fig.6d is a table showing an address book in which the sender mail addresses are registered in association with the group, according to periods of time.

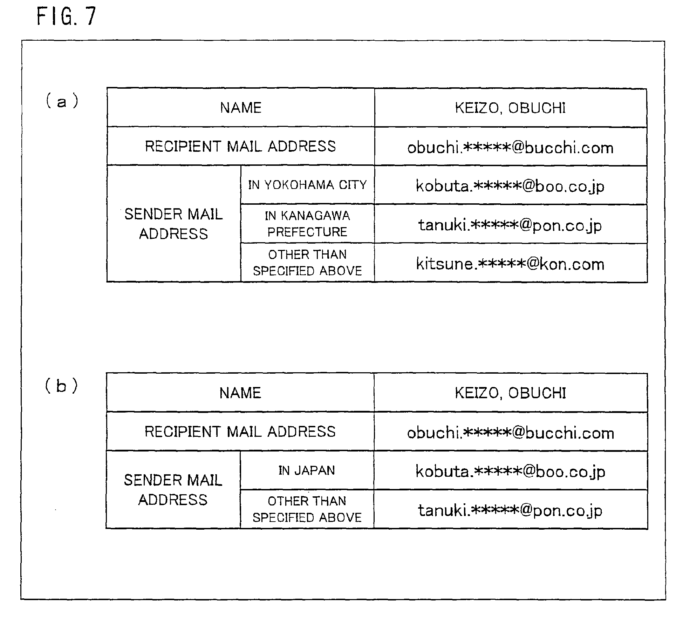

Fig.7 shows tables for illustrating address books in which the sender mail addresses are registered in association with the respective recipient mail addresses in consideration with positional condition, in the transmitting and receiving device in accordance with the present invention. Fig.7(a) is a table showing an address book in which the sender mail addresses are registered in association with the recipient mail address, according to a city and a prefecture, while Fig.7(b) is a table showing an address book in which the sender mail addresses are registered in association with the recipient mail address, according to countries.
Fig.8 is a diagram showing processing patterns in which the controlling section sets a sender mail address, in a case where a plurality of the mail destinations are designated in the transmitting and receiving device in accordance with the present invention.
Fig.9 is a table for illustrating network setting information registered in association with the recipient mail address registered in the address book in the transmitting and receiving device in accordance with the present invention.
Fig. 10 is an image in which the sender mail address is set up, in a case where the transmission processing of the mail created by conventional software is carried out.
Fig. 11 is an image showing a terminal device provided with a conventional E-mail function.

### REFERENCE NUMERALS

- 1.: Mail transmitting and receiving device (transmitting device, transmitting and receiving device)
- 2.: Controlling section
- 3.: Recording device
- 4.: Communicating section
- 5.: Inputting section
- 6.: Displaying section
- 7.: Address setting processing section (sender address setting means, address recording means, network connection setting means, signature putting means, and password entry requiring means)
- 8.: Transmission processing section
- 9.: Display processing section (notifying means, transmission history displaying means, recipient address displaying means, reception history displaying means)
- 10.: Input processing section (transmission destination address inputting means, address inputting means)
- 11.: Address storing section
- 12.: Transmission history storing section
- 13.: Informing processing section (informing means)
- 14.: Reception processing section (receiving means, reception data transferring means)

### BEST MODE FOR CARRYING OUT THE INVENTION

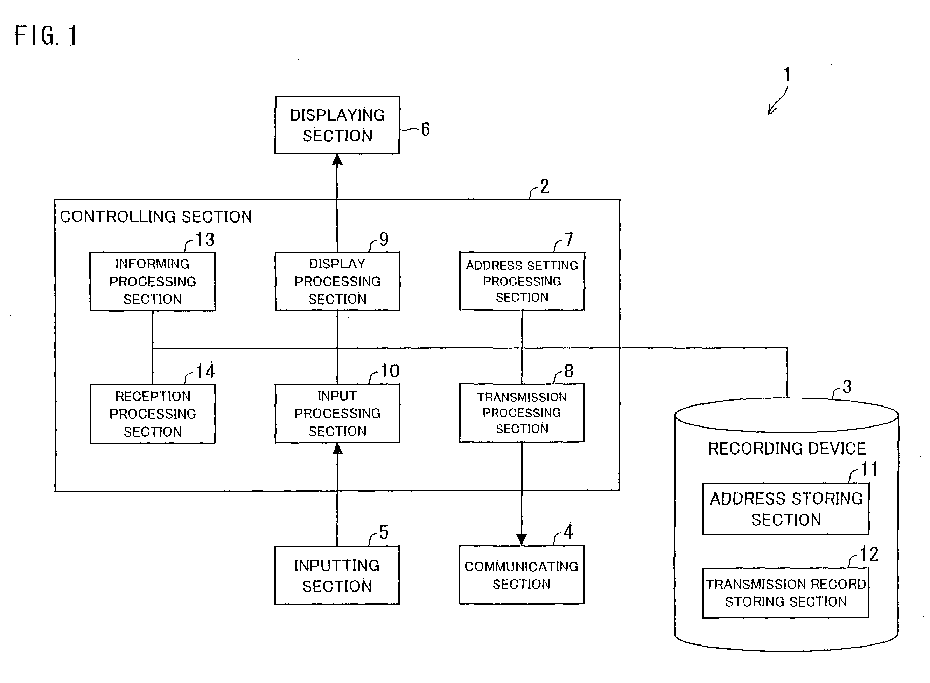

One embodiment of a transmitting and receiving device in accordance with the preset invention is descried as follows, with reference to Figs.1 to 9.

### (A Brief Description Of Mail Transmitting And Receiving Device 1)

Fig.1 is a diagram illustrating a block configuration of a mail transmitting and receiving device 1 in accordance with the present embodiment. The mail transmitting and receiving device 1 (transmitting device) includes a controlling section 2, a recording device 3, a communicating section 4, an inputting section 5, and a displaying section 6.

The controlling section 2 includes an address setting processing section 7 (sender address setting means, address recording means, and network connection setting means), a transmission processing section 8, a displaying processing section 9 (notifying means), an input processing section 10 (recipient address inputting means and address inputting means), an informing processing section 13, and a reception processing section 14. Functions of the sections constituting the controlling section 2 are realized by a CPU that carries out processing in cooperation with an operating system, according to various programs expanded in a memory. Alternately, a part or all of the functions of the sections constituting the controlling section 2 may also be realized solely by the CPU and the various programs expanded in the memory, without using the operation system.

The recording device 3 includes an address storing section 11 and a transmission history storing section 12. The address storing section 11 and the transmission history storing section 12 store therein various data for use in the processing that the controlling section 2 carries out. Such data are continually read out and written in by the controlling section 2, during execution of the processing. In addition, the recording device 3 stores the operating system and the various programs therein. Such operating system and programs stored in the recording device 3 are read out into the memory and executed by the CPU.

The input processing section 10 accepts a user input via the inputting section 5. The inputting section 5 includes a keyboard, a mouse, or the like. A user input encompasses data inputs of characters, numerals, and the like and operation inputs for commanding various processing. Each section of the controlling section 2 carries out processing, according to the user input accepted by the input processing section 10. Data inputted by the user is stored in the memory and the sections of the controlling section 2 use the data as required by the processing they are to carry out.

The display processing section 9 carries out display control of a screen, a character, and the like displayed on a display device that constitutes the displaying section 6. The displaying section 6 includes a display device, a memory for displaying an image, and the like. When using a function of the transmitting device, the user operates the transmitting device, referring to a screen displayed under control by the display processing section 9. The display device displays the characters entered by the user or displays in accordance with a result of the processing carried out by the sections of the controlling sections 2.

The transmission processing section 8 transmits data via the communicating section 4 and such data is transmitted to another information processing terminal via a network, the Internet, or the like. The communicating section 4 includes a network interface, a modem, or the like, and carries out communication procedure necessary for the data transmission and reception. In addition, the transmission processing section 8 also carries out update of the contents in the address storing section and/or storage of the various pieces of historical information on transmission of data, such as a destination of a transmission mail, the contents of the mail, and the like, in the transmission history storing section 12, besides carrying out data output of a destination of a transmission mail, the contents thereof, and the like to the communicating section 4 that carries out communication control.

Also, the mail transmitting and receiving device 1 in accordance with the preset invention can be realized as a portable phone provided with a mailing function, besides as a PC (personal computer) provided with mailing software. An arrangement of the mail transmitting and receiving device 1 in accordance with the present invention is not limited to a particular type of device.

### (Address Setting Processing section)

The following description explains in more detail a transmitting and receiving device 1 in accordance with the present invention, in particular, processing carried out by an address process setting section 7.

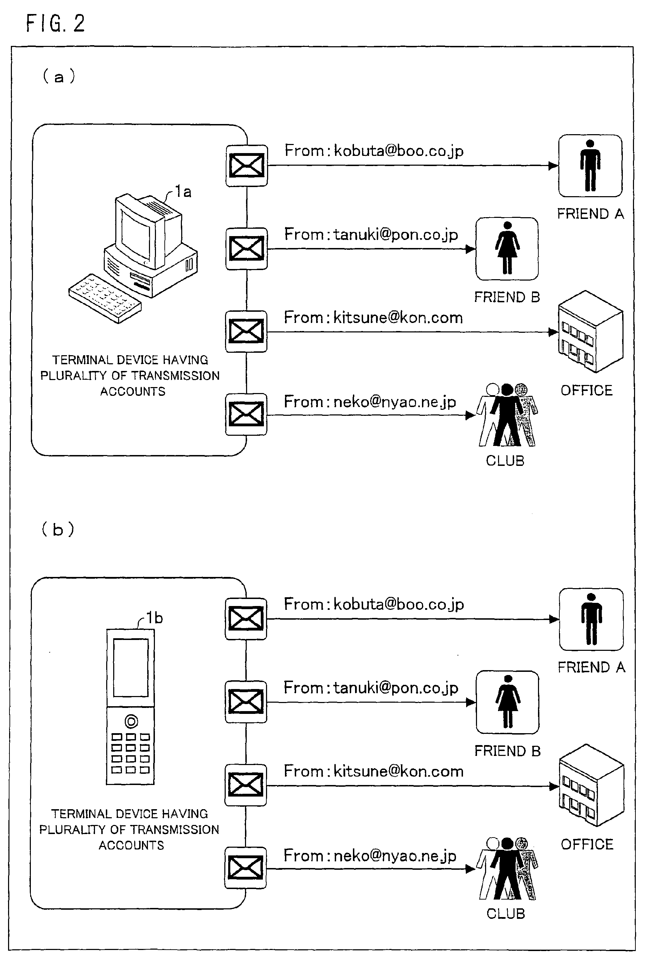

Fig.2 shows an image in which a transmitting and receiving devices 1 illustrated in the Fig.1 transmits mails by setting sender mail addresses, according to destinations. Fig.2(a) is an image in which a mail transmitting and receiving device 1a embodied as a PC transmits mails, while Fig.2(b) is an image in which a mail transmitting and receiving device 1b embodied as a portable terminal device transmits mails. As shown in Fig.2, the mail transmitting and receiving devices 1a and 1b have a plurality of the sender mail addresses and transmit a mail in which an appropriate sender mail address is set as follows: (i) "kobuta@boo.co.jp" to a friend A; (ii) "tanuki@pon.co.jp" to a friend B; (iii) "kitsune@kon.co.jp" to a coworker; and (iv) "neko@nyao.co.jp" to a member of a club.

In this way, the sender mail addresses to be used are switched over. For example, this prevents receiving a business-related mail at a private mail address. With the conventional mail software a user having a plurality of the sender mail addresses has to manually select which sender mail address to use, in order to perform mail transmission. Therefore, there are occasions in which the user mistakenly selects a wrong sender address and transmits a mail with the wrong sender address. On the other hand, with the mail transmitting and receiving device 1 in accordance with the present invention in which the address setting processing section 7 sets the sender mail address depending on the recipient mail address, it is possible to avoid such a problem.

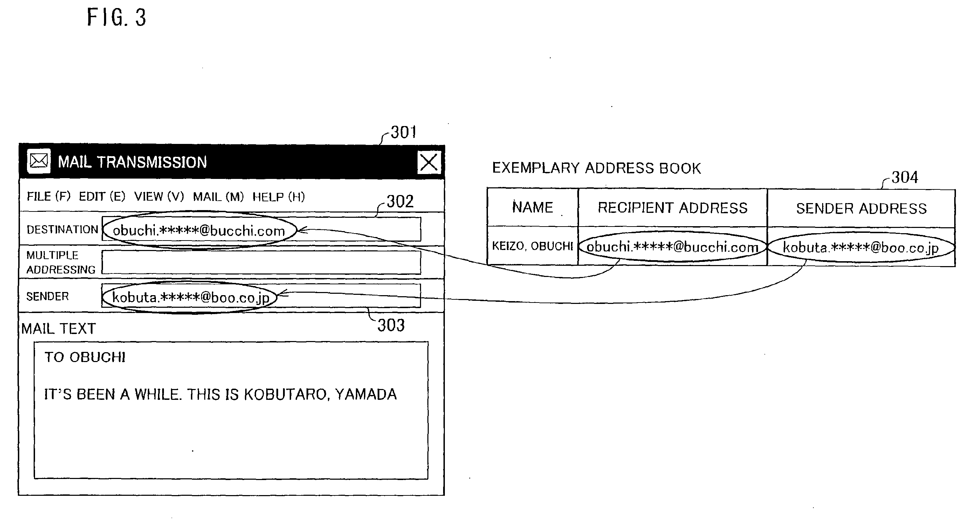

Fig.3 is an image of a display screen 301 for the mail transmission, in which the entry of the recipient mail address (recipient address) by the user sets the sender mail address (sender address). In the case shown in Fig.3, when the user enters the receiver's mail address "obuchi.xxxxx@bucchi.com" in an address field 302, the sender mail address "kobuta.xxxxx@boo.co.jp" stored in association with the receiver's mail address "obuchi.xxxxx@bucchi.com" in the address book in advance is set up in a sender field 303.

The following explains how the sections of the mail transmitting and receiving device 1 operate in the case illustrated in Fig.3. First of all, the user enters the recipient mail address "obuchi.xxxxx@bucchi.com" in the address field 302 via the inputting section 5. Then, after the input processing section 10 accepts the entry of the recipient mail address "obuchi.xxxxx@bucchi.com," the address setting processing section 7 searches the address storing section 11 (which corresponds to the address book described above) in the recording device 3; acquires the sender mail address "kobuta.xxxxx@boo.co.jp" stored in association with the recipient mail address "obuchi.xxxxx@bucchi.com"; and outputs the acquired recipient mail address to the display processing section 9. Subsequently, the display processing section 9 carries out the display control such that the displaying section 6 displays the sender address "kobuta.xxxxx@boo.co.jp" in the sender filed 303.

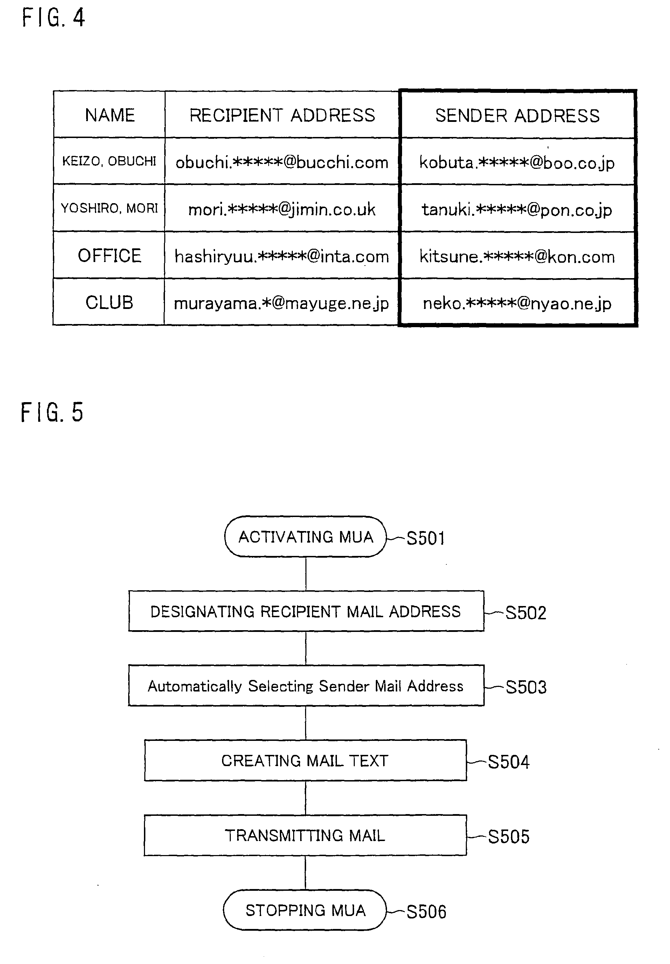

Fig.4 is a table showing mail addresses registered in the address book stored in the address storing section 11. As illustrated in Fig.4, the sender mail addresses are registered in association with names of respective mail recipients, i.e., the respective recipient mail addresses (recipient mail addresses).

For example, "kobuta.xxxxx@boo.co.jp" is associated, as sender mail address, with a recipient mail address "obuchi.xxxxx@bucchi.com" of a mail recipient "Keizo, Obuchi"; "tanuki.xxxxx@pon.co.jp" is associated, as the sender mail address, with a recipient mail address "mori.xxxxx@jimin.co.uk" of a mail recipient "Yoshiro, Mori"; "kitsune.xxxxx@kon.com" is associated, as the sender mail address, with a recipient mail address "hashiryuu.xxxxx@inta.com" of a mail transmission destination "Office"; "neko.xxxxx@nyao.ne.jp" is associated, as the sender mail address, with a recipient mail address "murayama.xxxxx@mayuge.ne.jp" of a mail transmission destination "Club."

In the case illustrated in Fig.4, different sender addresses are associated with different recipient mail addresses in the address book of the address storing section 11, yet all of them are used by the user of the mail transmitting and receiving device 1. That is, the user of the transmitting and receiving device 1 uses different sender mail addresses for the respective mail recipients. With the mail transmitting and receiving device 1, if the address book illustrated in Fig.4 is stored in advance, setting the recipient mail address sets the sender mail address, at the time of the mail transmission. That is, in the case where the plurality of the sender mail addresses are registered, the transmitting and receiving device 1 eliminates the user's need for manually selecting the sender mail address according to the transmission destination.

A method of setting the address book may be arranged such that the user newly enters a sender mail address for registration on a registration screen of the address book. Besides, the method may be arranged such that if a sender mail address is registered for some other recipient mail address in the address book, (i) the sender mail address is displayed as a default on the registration screen and/or that a sender mail address can be selected from a pull-down menu.

Fig.5 is a flowchart for illustrating the process in which the mail transmitting and receiving device 1 carries out the mail transmission. First of all, at S501, the user activates an MUA, i.e., mail software, installed in the mail transmitting and receiving device 1. Subsequently, a screen as illustrated in Fig.3 is displayed, on which screen a transmission mail is to be prepared.

Then, the user sets a mail address of a transmission destination in the address field 302 at S502. At this stage, the user enters the mail address of the transmission destination via the inputting section 5.

Then, the mail transmitting and receiving device 1 sets the sender mail address in the sender field 303, at S503. More specifically, the input processing section 10 acquires the recipient mail address entered via the inputting section 5, and then the address setting processing section 7 searches the address book (refer to Fig.4) in the address storing section 11 for the recipient mail address set in the address field 302 at S502; and then acquires the sender mail address stored in association with the recipient mail address entered. Subsequently, the display processing section 9 displays, in the sender field shown in Fig.3, the sender mail address thus acquired by the address setting process section 7.

Subsequently, the user composes a mail text of the mail at S504. That is, the user enters via the keyboard of the inputting section 5, such a mail text to a recipient as shown in a mail text field of Fig.3.

Then, the transmission of the mail thereby created is carried out at S505. More specifically, the transmission of the mail is carried out as follows. First, by operating the inputting section 5, the user requires the transmitting and receiving device 1 to transmit the mail. In the mail transmitting and receiving device 1, once the input processing section 10 accepts the request for the mail transmission, the transmission processing section 8 outputs data of a transmission mail to the communication section 4 that carries out communication control. Examples of such data encompass a mail destination, a mail text, and the like of the transmission mail. The transmission processing section 8 also performs (i) the updating of the address book in the address storing section 11 of the recording device 3 and (ii) the storing the mails that have already been transmitted, in the transmission history storing section 12.

Once the transmission processing of the mail is completed, the screen shown in Fig.3 closes, and the user finishes the MUA at S506.

### (Exemplary Modification of Address book)

As described above, the address storing section 11 stores the address book in which the sender mail addresses are registered in association with the recipient mail addresses (destination mail addresses) as shown in the exemplary arrangement of Fig.4. However, the address book is not limited to the exemplary arrangement shown in Fig.4. The following description explains other arrangements of the address book.

Fig.6 shows tables for illustrating address books in which the sender mail addresses are registered in association with the recipient mail addresses or groups, in consideration of temporal conditions. Fig.6(a) is a table for illustrating an address book in which sender mail addresses are registered in association with the recipient mail address, according to periods of time. Fig.6(b) is a table for illustrating an address book in which sender mail addresses are registered in association with the recipient mail address, according to days of the week. Fig.6(c) is a table for illustrating an address book in which sender mail addresses are registered in association with the recipient mail address, according to dates. Fig.6(d) is a table for illustrating describing an address book in which the sender mail addresses are registered in association with the group, according to periods of time.

In the address book shown in Fig.6(a), two different sender mail addresses are registered in association with a recipient mail "obuchi.xxxxx@bucchi.com" of a mail recipient "Keizo, Obuchi," according to periods of time. In this case, if a mail is transmitted to the recipient mail address "obuchi.xxxxx@bucchi.com" between 9:00 to 17:00, "kobuta.xxxxx@boo.co.jp" is set as the sender mail address. In another case where a mail is transmitted to the recipient mail address "obuchi.xxxxx@bucchi.com" during any other periods of time than designated above, i.e., between 17:00 to 9:00, "tanuki.xxxxx@pon.co.jp" is set as the destination.

Also in a case that the address book shown in Fig.6(a) is used, once the input processing section 10 accepts the entry of the recipient mail address, the address setting processing section 7 searches the address book stored in the address storing section 11 for the entered recipient mail address. Here, the mail transmitting and receiving device 1 includes a clock (not illustrated), and the address setting processing section 7 acquires a date and/or a clock time on/at which the entry of the recipient mail address is accepted. Then, as a result of searching, the address setting processing section 7 acquires the recipient mail address that is set in association with the period of time including the acquired clock time, out of the sender mail address stored in association with the recipient mail address entered.

In the address book illustrated in Fig.6(b), two different sender mail addresses are registered, according to days of the week, in association with the recipient mail address "obuchi.xxxxx@bucchi.com" of the mail recipient "Keizo, Obuchi." In this case, if a mail is transmitted to the recipient mail address "obuchi.xxxxx@bucchi.com" on any day from Monday to Friday, "kobuta.xxxxx@boo.co.jp" is set for the sender mail address. On the other hand, if a mail is transmitted to the recipient mail address "obuchi.xxxxx@bucchi.com" on any other day of the week than the designated above, i.e., on Saturday or Sunday, "tanuki.xxxxx@pon.co.jp" is set as the sender mail address. In a case that the address book illustrated in Fig.6(b) is used, the address setting processing section 7 acquires, as in the case of the address book illustrated in Fig.6(a), a transmission mail address, based on temporal conditions in which the entry of the recipient mail address is accepted.

In the address book shown in Fig.6(c), two different mail addresses are registered in association with the recipient mail address "obuchi.xxxxx@bucchi.com" of the mail recipient "Keizo, Obuchi," according to dates. In this case, if a mail is transmitted to the recipient mail address of "obuchi.xxxxx@bucchi.com," "kobuta.xxxxx@boo.co.jp" is usually set as the sender mail address, while in another case where a mail is transmitted to the recipient mail address of "obuchi.xxxxx@bucchi.com" on from August 12 to August 16, "tanuki.xxxxx@pon.co.jp" is set as the sender mail address. In the case of the address book shown in Fig.6(c), the address setting processing section 7 acquires the sender mail address, as in the case of the address book illustrated in Fig.6(a), based on the date on which the entry of the recipient mail address is accepted.

In the address book shown in Fig.6(d), no recipient mail addresses is registered as a recipient. In this case, two different mail addresses are registered in association with a group name, according to periods of time. In the case of Fig.6(d), if mails are transmitted to members of a tennis club between 9:00 to 17:00, "kobuta.xxxxx@boo.co.jp" is set as the sender mail address. On the other hand, if mails are transmitted thereto in any other periods of time than designated above, i.e., from 17:00 to 9:00, "tanuki.xxxxx@pon.co.jp" is set as the sender mail address.

In the mail address shown in Fig.6(d), the recipient mail addresses are, for example, registered for the group. Referring the address list allows the address setting processing section 7 to set the sender mail addresses, if no sender mail addresses is registered in association with the recipient mail addresses at the time when destinations are designated with the recipient mail addresses associated with the group name of "tennis club." Also, in the case of address book shown in Fig.6(d), the address setting processing section 7 acquires the sender mail addresses, as in the case of the address book shown in Fig.6(a), based on periods of time during which the entries of the recipient mail addresses are accepted.

A setting range on which sender mail addresses to set are switched over according to dates, periods of time, or days of the week is not limited to a particular range. Thus, as shown in Figs.6(a) to 6(c), the setting may be arranged such that sender addresses are switched over with respect to each mail recipient, based on temporal conditions. Alternately, as shown in Fig.6(d), the setting may also be arranged such that sender mail addresses are switched over with respect to grouped recipient mail addresses. Further, the setting may be arranged such that sender mail addresses are switched over with respect to all of the destination addresses at once, based on temporal conditions. In addition, each of the setting described above may be combined as appropriate (e.g., the sender mail addresses are switched over, based on days of the week and periods of time).

Further, in a case where a plurality of the recipient mail addresses are registered for one mail recipient in the address book (e.g., different mail addresses are registered as recipient mail addresses for A's home, for A's portable phone, and for A's Office, in a field allocated to a recipient A), the setting may be arranged such that combinations of the recipient mail addresses and the sender mail addresses are switched over, based on temporal conditions. This cuts the work for switching over the sender mail addresses with respect to one mail recipient, between a mail transmission during working hours and a mail transmission during personal time.

Fig.7 shows address books in which the sender mail addresses are registered in association with the recipient mail addresses, according to on positional conditions. Fig.7(a) is a table illustrating an address book in which the sender mail addresses are registered in association with the recipient mail address, depending on a city and a prefecture in Japan. On the other had, Fig.7(b) is a table illustrating an address book in which the sender mail addresses are registered in association with the recipient mail address, according to countries.

In the address book illustrated in Fig.7(a), three different sender mail addresses are registered in association with the recipient mail address "obuchi.xxxxx@bucchi.com" of the mail recipient "Keizo, Obuchi", according to locations. In this case, if a mail transmission is carried out in the Yokohama city, "kobuta.xxxxx@boo.co.jp" is set as the sender mail address; if a mail transmission is carried out within the Kanagawa prefecture but outside of the Yokohama city, "tanuki.xxxxx@pon.co.jp" is set as the sender mail address; and if a mail transmission is carried out in a location other than designated above, "kitsune.xxxxx@kon.com" is set as the sender mail address.

Likely, in the case of the address book illustrated in Fig.7(a), when the input processing section 10 accepts the entry of the recipient mail address, the address setting processing section 7 searches the address book stored in the address storing section 11, for the entered recipient mail address. Here, the mail transmitting and receiving device 1 includes means (not illustrated) for using a system for detecting location information. Examples of such a system encompass GPS and the like. The address setting process section 7 acquires information on the location at which the mail transmitting and receiving device 1 is located at the time when the entry of the recipient mail address is accepted. Then, as a result of the searching above, the address setting processing section 7 acquires, out of the sender mail addresses stored in association with the entered recipient mail address, the sender mail address set in association with a positional condition including the location indicated by the acquired location information.

In the address book shown in Fig.7b, two different sender mail addresses are registered in association with the recipient mail address "obuchi.xxxxx@bucchi.com" of the mail recipient "Keizo, Obuchi", according to locations. In this case, when a mail transmission is carried out in Japan, "kobuta.xxxxx@boo.co.jp" is set as the sender mail address. On the other hand, if a mail transmission is carried out outside of Japan, "tanuki.xxxxx@pon.co.jp" is set as the sender mail address. In the case of the address book illustrated in Fig.7b, the address setting processing section 7 acquires the sender mail address, as in the case of the address book illustrated in Fig.7(a), based on the location at which the mail transmitting and receiving device 1 is located at the time when the entry of the recipient mail address is accepted.

As an alternative, such a system acquiring location information may be arranged to acquire the location information by identifying a base station to which the mail transmitting and receiving device 1 is connected. The system may also be arranged to use an RFID or the like. In this regard, the system for acquiring location information is not limited to a particular arrangement.

The exemplary case illustrated in Fig.7 shows a case in which the sender mail addresses are set, according to geographical locations. However, as an alternative, the sender mail addresses may also be set, based on a network to which the mail transmitting and receiving device 1 is connected. In this regard, the address setting process section 7 is not limited to a particular arrangement.

### (As To Change Of Recipient Address)

As describe above, user's selection of the recipient mail address (i.e., destination mail address) sets a sender mail address that are registered in an address book in advance, in the sender field of the MUA. In addition, this selection sets other settings that are set in association with the recipient mail address. However, there may be a case that the sender mail address set in accordance with the recipient mail address is desired to be changed in the middle of the process. Taking such a case into consideration, a sender mail address in the sender field may be arranged to be readily changed. That is, the user may directly enter the sender mail address or select another registered sender mail address with the use of a pull-down menu.

When the user manually changes the sender mail address, it is preferable that the sender mail address is alarmingly displayed to the user in a color, font, or size different from ones used usually so as to be visually detected that the sender mail address is different from one usually used (since change of the sender mail in the middle of the process means that a mail transmission is carried out with use of a sender mail address different from usual one). Besides, it is preferable to adopt an arrangement that prompts the user to confirm the change at the time of the mail transmission, since there is possibility that the user accidentally enters or selects a wrong sender mail address. The present invention is not limited to a particular arrangement in this regard.

Furthermore, it may be arranged that a post-change sender mail address is reflected in the address book (i.e., the sender mail address to be registered will be changed), if the user changes the sender mail address (i) that is registered in association with the recipient mail address and (ii) that is set in the sender field by the mail transmitting and receiving device 1. In this arrangement, it is preferable that the user is prompted to confirm as to whether the registration in the address book can be changed or not.

With this arrangement, once the input processing section 10 accepts the user's entry of the sender mail address in the sender field, the display processing section 9 causes the displaying section 6 to display a message that prompts the user to confirm as to whether the registration in the address book can be changed or not. At this stage, if the user inputs the confirmation of the change in the registration, the address setting processing section 7 updates the address book stored in the address storing section 11.

### (Processing In Case Sender Address Is Not Registered)

The following description explains a case where no sender mail address is set in association with the recipient mail addresses. Examples of such a case may encompass cases in which: a recipient mail address is registered while no recipient mail addresses is registered in association therewith; a recipient mail address not registered in the address book is designated as the destination; and the like. In the mail transmission, the sender mail address has to be set.

Therefore, in advance, a sender mail address (and various settings) is registered, independently from the address book, as a default sender mail address (predetermined sender mail address) in the address storing section 11. This allows the address setting processing section 7 to set the default sender mail address in the sender field, if the address setting processing section 7 cannot acquires, in the address book stored in the address storing section 11, any sender mail address associated with the designated recipient mail address. Alternately, the user may freely select from the sender mail addresses registered in the address book, by using the pull-down menu in the sender field (sender mail address field) of the mail transmission screen of the MUA.

It is more likely a case that the user hereafter uses the sender mail address newly entered in or designated to the sender field, at the time when no sender mail address is registered in association with the recipient mail address. Thus, it is preferable to register, in the address book, such sender mail address in association with the recipient mail address such that the sender mail address is set as a default sender mail address to the recipient mail address.

Further, (i) if no sender mail address is registered in association with a designated recipient mail address; and (ii) if another mail was previously transmitted to the same recipient, that is, another mail was transmitted, with the same recipient mail address being designated, a sender mail address that was set in the transmission of the another mail is likely to be desired to be used also for this mail transmission. Thus, if no sender mail address is set, in the address book, in association with the designated recipient mail address, the transmission mail box stored in the transmission history storing section 12 may be searched for the sender mail address set to the mail (past data) that was transmitted to the same recipient mail address in the past, so that the same sender address will be set in the sender field (sender mail address).

### (As To A Plurality Of Destinations)

The following description explains a case in which a plurality of mail destinations are designated. Examples of such a case may include cases in which: a plurality of the recipient mail addresses are set in the address (Send to) field in the mail transmission screen of the MUA (refer to Fig.3); and transmission mail addresses are set in the CC (Carbon Copy) field and/or a BCC (Blind Carbon Copy) filed, which fields are different from the address field.

The following (1) to (6) describes exemplary processing in which the controlling section 2 sets the sender mail addresses in the mail transmitting and receiving device 1, in such cases as described above.
(1) If one recipient mail address is set in the address field and other recipient mail addresses are set in the CC field and the BCC field, sender mail addresses associated with the recipient mail address set in the address field are set for mails to be transmitted to mail recipients set in the CC field and the BCC field.
(2) If a plurality of the recipient mail addresses are set in the address field, the recipient mail addresses are prioritized (fixing an order of priority). The sender mail address associated with the recipient mail address of the highest-priority is set, and transmission is carried out with the sender mail address associated with the recipient mail address of the highest-priority.
(3) If the plurality of the recipient mail addresses are set in the address filed, sender mail addresses are prioritized (fixing an order of priority). The sender mail address of the highest-priority is set, and transmission is carried out with the sender mail address of the highest-priority.
(4) The user of the mail transmitting and receiving device 1 is prompted to designate which sender mail address to use for transmission. The sender mail address thereby designated by the user is set, and the transmission is carried out with the sender mail address thereby designated by the user.
(5) Sender mail addresses respectively associated with a plurality of designated recipient addresses are set, and transmission is carried out with such sender mail addresses.
(6) Transmission logs in the transmission box of mail software in (5) are respectively prepared for the recipient mail addresses, and stored.

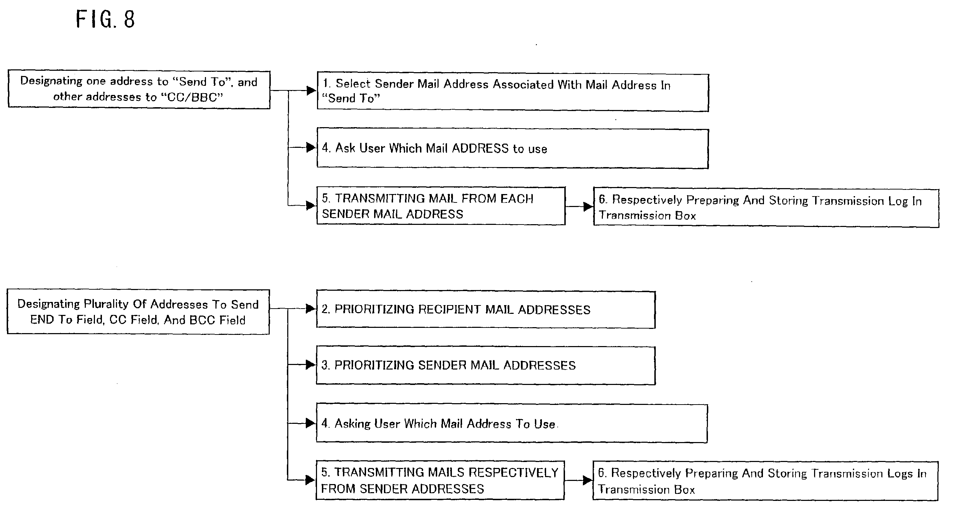

Fig.8 is a diagram illustrating a process pattern in which the controlling section 2 sets the sender mail addresses in the mail transmitting and receiving device 1, in a case where the plurality of destinations are designated. Fig.8 illustrates two cases in which: one recipient mail address is set in the address field while other transmission mail addresses are set in the CC filed and the BCC field (hereinafter, referred to as a first case); and a plurality of the mail addresses are set in the address field, the CC filed, and the BCC field (hereinafter, referred to as a second case).

As illustrated in Fig.8, processing carried out by the controlling section 2 in the first case may be, for example, processing of (1), (4), (5), and (6) described above. On the other hand, processing carried out by the controlling section 2 in the second case may be, for example, processing of (2), (3), (4), (5), and (6) described above.

### (As To Association Between Recipient Mail Address And Settings)

The above description explains the processing in which setting the recipient mail address causes the controlling section 2 to set the sender mail address in the transmitting device 1 at the time of a mail transmission. Alternately, setting the recipient mail address may cause other setting than the sender mail address.

As an exemplary embodiment in which setting the recipient mail addresses causes other setting than the sender mail addresses, the following description explains an embodiment in which the network setting of the mail transmitting and receiving device 1 is carried out.

An example of association between a sender mail address and network setting includes that of a portable notebook PC used at home, at office, or at a business trip destination. In transmission of a mail to a personal friend, which mail is often transmitted at home, it is preferable that the network setting is switched over to a network setting that is for connecting to a network at home. On the other hand, in transmission of a mail to a business relate, which mail is transmitted only from the office, it is preferable that the network setting is switched over to a network setting that is for connecting to a network at the office.

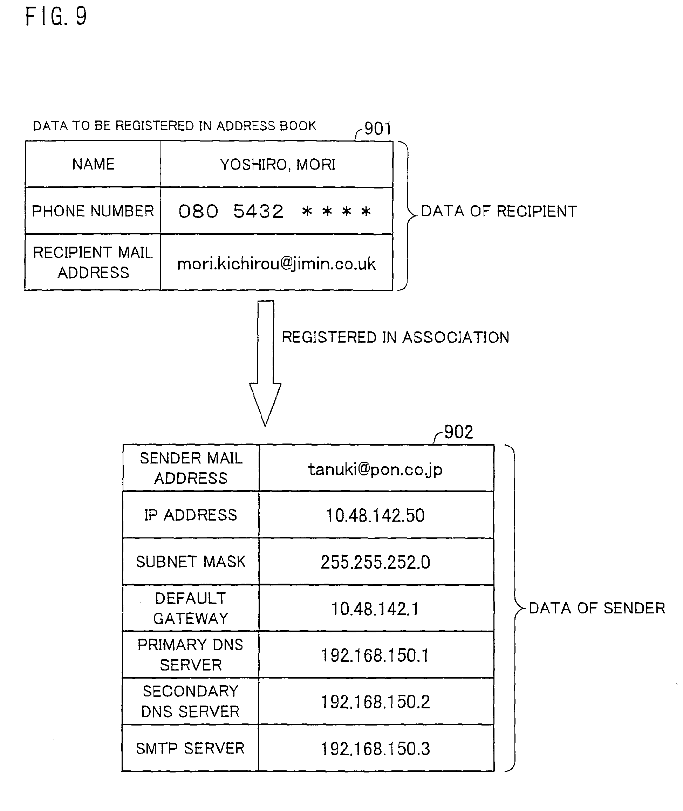

Fig.9 is a table for describing network setting information (the setting information on a network connection) that is registered in association with the recipient mail addresses registered in the address book. In a case shown in Fig.9, address information 901 of a mail recipient "Yoshiro, Mori" is registered in the address book. The address information 901 includes a name, a phone number, and a recipient mail address. In association with the address information 901, the sender mail address "tanuki@pon.co.jp" and various pieces of network setting information 902 are registered.

In the case shown in Fig.9, the followings are registered as the network information: that is, (i) "IP address," "subnet mask," "default gateway," and "Proxy server," each of which is for the mail transmitting and receiving device 1 to be connected to the network and (ii) "SMTP server" used for the mail reception. Alternately, other pieces of information on network setting may also be registered. In this regard, the present invention is not limited to a particular arrangement.

The network setting information is registered in association with the recipient mail addresses in the above manner. Thus, when the communication terminal of the user applies a communication protocol as an IP protocol, it is possible to switch over the sender mail addresses and the various pieces of network setting information encompassing IP addresses, according to the recipient mail address. Examples of the network setting information are subnet masks, default gateways, Proxy servers, SMTP servers, and the like. It is preferable that (i) switching over the network setting information is carried out only at the time of the mail transmission and (ii) the network setting goes back to the original state on completion of the transmission processing.

There may be a case that such settings do not adequately correspond to the network being connected to. For example, a case in which even though the DNS server designates an address in the intranet, the communicating device is operated on the Internet. As a countermeasure to the case above, it is preferable to adopt an arrangement: that prompts the user to switch over the settings, by warning an error; that automatically switches over the settings; that sets transmission reservation; and the like. In this regard, the present invention is not limited to a particular arrangement.

### (Modifications)

As described above, it is preferable that a mail transmitting and receiving device 1, the transmitting and receiving device 1 arranged to prepare and store a transmission log in a transmission box of mail software with respect to each of the recipient mail addresses, is arranged such that when a transmission box is displayed for checking a transmission log, the user can readily distinguish which transmission mail address a mail is transmitted from. More specifically, (i) different icons are stored, in advance, in association with the respective sender mail addresses in the recording device 3 and (ii) when the transmission box is displayed, the display processing section (transmission history displaying means) 9 displays the icons indicative of the sender mail addresses of the data transmission history. Alternately, (i) different colors may be stored in association with the respective sender mail addresses in the recording device 3 and (ii) the display processing section 9 displays a data transmission history in a color associated with the sender mail address. The present invention is not limited to a particular arrangement in this regard.

Further, the mail transmitting and receiving device 1 has the arrangement in which the various pieces of the network setting information are associated with the respective recipient mail addresses, as described above. As an alternative, the mail transmitting and receiving device 1 may also have the arrangement in which network information on servers (SMTP server, POP server, DNS server, PROXY server, and the like) to connected to can be set for the respective sender mail addresses. More specifically, an entry of a recipient mail address by the user causes a sender mail address associated with the entered recipient mail address to be selected, which in turn causes updating already-set network setting information to another network setting information on a server or the like that is associated with the sender mail address thus selected. That is, the selection of the sender mail address causes the address setting processing section (network connection setting means) 7 to switch over the network setting information having been set, to another network setting information on the servers that is associated with the sender mail address thus selected.

Further, the mail transmitting and receiving device 1 may be arranged such that signatures (subscriptions) can be prepared respectively for a plurality of accounts, i.e., sender mail addresses. With this arrangement, different signatures are (i) registered in association with the sender mail addresses and (ii) read out so as to be set to mails for the respective sender mail addresses at the time of the mail transmission. That is, the selection of the sender mail addresses causes the address setting processing section (signature putting means) 7 to put into a mail, the signature associated with the selected sender mail address.

Further, the mail transmitting and receiving device 1 may be arranged such that transmission passwords can be set for a plurality of accounts, i.e., sender mail addresses. With this arrangement, an entry of the password is required on transmission of the mail. Different transmission passwords are respectively registered in association with the sender mail addresses in advance, and the user enters the passwords respectively for the sender mail addresses at the time of the mail transmission. At this stage, selecting the sender mail address causes the address setting processing section (password entry prompting means) 7 to output to the display processing section 9, a message prompting the user to enter the password associated with the selected sender mail address. Then, the display processing section 9 causes the displaying section 6 to display the message. Furthermore, the entry of the password by the user with the use of the inputting section 5 causes the address setting processing section 7 to acquire the password via the input processing section 10 and then to perform authentication of the password. Then, if the address setting processing section 7 authenticates the user to transmit a mail from the selected sender mail address, the transmission processing section 8 carries out the mail transmission processing.

Further, in the mail transmitting and receiving device 1, the entry of the recipient mail address causes the sender mail address associated therewith in advance to be selected. Alternately, in a case where the user enters the recipient mail address, a desired recipient mail address may be selected from the recipient address list (e.g., an address book). In addition, it is preferable that the associations between the recipient mail addresses and the sender mail addresses can be readily detected, when the recipient address lists are displayed for designation of the recipient mail address. More specifically, (i) different icons are stored, in advance, in association with the sender mail addresses in the recording device 3 and (ii) in displaying the recipient address list, the display processing section (recipient address displaying means) 9 displays the icons indicative of the sender mail addresses associated with the respective recipient mail addresses. As an alternative, (i) different colors may be associated with the respective sender mail addresses in the recording device 3 and (ii) the display processing section 9 displays the recipient mail addresses in the same colors as associated with the sender mail addresses that are associated with the recipient mail addresses. The present invention is not limited to a particular arrangement in this regard.

Further, in a case where the mail transmitting and receiving device 1 has a function of automatically connecting to the POP server (mail server), i.e., if the mail transmitting and receiving device 1 is arranged so as to include the setting that downloads a received mail by connecting to the POP server at predetermined intervals, it is preferable that the mail transmitting and receiving device is arranged such that intervals at which the POP server is connected to can be set with respect to each of the accounts, i.e., the sender mail addresses. For example, in a case of ordinary mail transmission and reception via the Internet, received mails are downloaded from the POP server. Thus, the intervals at which mails are downloaded are stored for the respective sender mail addresses in the recording device 3. Then, the reception processing section 14 accesses to the POP server at the downloading intervals stored in the recording device 3, and carries out the reception processing of the received mails.

As to a case of a portable phone, usually the mail server gives notice of mail reception before the portable phone downloads the received mails. However, the portable phone can be arranged in a same manner above, provided that the portable phone can periodically access to the mail server. The present invention is not limited to a particular arrangement in this regard.

In addition, it is preferable that the mail transmitting and receiving device 1 above is arranged such that informing manners can be set for the respective accounts, i.e., the sender mail addresses. That is, by registering different informing manners in association with the respective sender mail addresses in advance, it becomes possible to, for example, inform of mail reception: by ringer melody A when a sender mail address A (account A) receives a mail; by ringer melody B when a sender mail address B receives a mail; and by vibrating alert when a sender mail address C (account C) receives a mail. That is, the informing manners are stored for the respective sender mail addresses in the recording device 3, and the informing processing section (informing means) 13 carries out control of ringer melodies and vibrating alert.

Further, if the mail transmitting and receiving device 1 is arranged such that the reception logs are prepared and stored in the reception box of the mail software, it is preferable that when the reception box is displayed for checking the reception logs, the display is arranged in readily detectable manners such that that which address receives the mail, i.e., to which sender mail address the mail reception is carried out, can be distinguished with ease. More specifically, (i) different icons are stored, in advance, in association with the sender addresses in the recording device 3 and (ii) the display processing section (reception history displaying means) 9 displays the icons indicative of the sender mail addresses for the respective reception logs, when a windows of the reception box is opened. Alternately, (i) different color may also be stored in association with the sender mail addresses in the recording device 3 and (ii) the display processing section 9 may display the reception logs in the colors associated with the sender mail address The present invention is not limited to a particular arrangement in this regard.

Further, it is preferable that the mail transmitting and receiving device 1 is arranged such that the received mails can be transferred to an allocated folder, depending on the accounts, i.e., the sender mail addresses of the mail transmitting and receiving device 1. That is, folders for storing the received mails are associated with the sender addresses of the transmitting and receiving device in advance. In the reception of the mails, the received mail is stored in the folder associated with the sender mail address. That is, (i) the folders allocated to the respective sender mail addresses are stored in the recording device 3 and (ii) in the reception of the mails, the reception processing section (received data transferring means) 14 stores the received mails in the folders allocated to the sender mail addresses.

The mail transmitting and receiving device 1 may also be arranged such that various software can be linked to the plurality of the accounts, i.e., sender mail addresses. In this case, it is preferable to select and set the different software, out of the plurality of the mail software having the same functions, for the respective sender mail addresses.

This arrangement allows, for example, the transmitted mail or the received mail to display a clickable URL indicative of a storing place of the software. Clicking this URL activates the Internet Explore® as Web-browsers, if the mail is transmitted from or received by the sender mail address A (i.e., account A). On the other hand, clicking the URL activates the Netscape® as Web-browsers, if the mail is transmitted or received with the use of the sender mail address B (i.e., account B). Software capable of being set for the respective sender mail addresses is not limited to particular type of software. Thus, besides the software for the Web-browser, various external software such as Viewer, Editor, software for playing music/movie, or the like may be set.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

The blocks, in particular, a controlling section 2 of the mail transmitting and receiving device 1 may be constituted by hardware logic or may be realized by software using a CPU in the following manner.

The transmitting and receiving device 1 includes a CPU (central processing unit) and memory devices (memory media). The CPU (central processing unit) executes instructions in control programs realizing the functions. The memory devices include a ROM (read only memory) which contains programs, a RAM (random access memory) to which the programs are loaded, and a memory containing the programs and various data. The objective of the present invention can also be achieved by mounting to the transmitting and receiving device 1 a computer-readable storing medium containing control program code (executable program, intermediate code program, or source program) for the transmitting and receiving device 1, which is software realizing the aforementioned functions, in order for the computer (or CPU, MPU) to retrieve and execute the program code contained in the storing medium.

The storing medium may be, for example, a tape, such as a magnetic tape or a cassette tape; a magnetic disk, such as a floppy® disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The transmitting and receiving device 1 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transferring medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth, 802.11 wireless, HDR, mobile telephone network, satellite line, or terrestrial digital network. The present invention encompasses a carrier wave or data signal transmission in which the program code is embodied electronically.

A transmitting device in accordance with the present invention that is configured to transmit data to the recipient address entered in the transmitting device includes (i) the recipient address inputting means configured to accept the entry of the recipient address and (ii) the sender address setting means configured to set as the sender address of the data, an address associated, in advance, with the recipient address thus accepted by the recipient address inputting means.

A transmitting method in accordance with the present invention that is configured to transmit data to the recipient entered includes the steps of: (i) accepting the recipient address and (ii) setting as the sender address of the data, an address that is associated, in advance, with the recipient address thus accepted by the recipient address inputting means.

In the transmission of data, this eliminates the user's need for manually and repeatedly selecting the sender address set to the transmission data. Thus, it is possible to increase convenience in the transmission of data such as a mail and the like, if the user has the plurality of the sender mail address.

The plurality of the sender mail address may be selectively used, for example, depending on private use or business use, which thus generates the need for selecting a suitable sender address in accordance with the recipient address designated for the destination. However, the present invention eliminates the user's need for manually and repeatedly selecting the sender address, thereby decreasing the possibility of accidentally setting an unsuitable sender mail address to the transmission data.

Specific embodiments or arrangements described in the detail descriptions of the invention are made to show the technical contents of the present invention. The present invention should not be interpreted within such limitations, and embodiments and arrangements of the present invention may be varied in the spirit of the present invention and within the scope of claims described below.

### INDUSTRIAL APPLICABILITY

The present invention can be used for a terminal device provided with mail transmission and reception functions and, in particular, suitably used for terminal devices capable of setting a different sender mail address to a mail according to where the mail is to be transmitted. Examples of such terminal devices are personal computers, portable phones, and the like.

## Claims

1. A transmitting device configured to transmit data to a recipient address entered in the transmitting device, comprising:
recipient address inputting means configured to accept an entry of the recipient address; and
sender address setting means configured to set as a sender address of the data, an address associated, in advance, with the recipient address thus accepted by the recipient address inputting means.

2. The transmitting device as set forth in claim 1, wherein:
at least one piece of information on a day of the week, a date, and a clock time is associated with the addresses; and
the sender address setting means is configured to (i) select an address associated to the at least one piece of information on a day of the week, a date, and a clock time on/at which the recipient address is designated, out of the addresses associated, in advance, with the recipient address accepted by the recipient address inputting means; and to (ii) set as the sender address, the address thus selected.

3. The transmitting device as set forth in claim 1, wherein:
the sender address setting means is configured to (i) select an address in association with a location in which the transmitting device accepts the designation of the recipient address, out of the addresses associated with recipient address according to positional information; and to (ii) set as the sender address, the address thus selected.

4. The transmitting device as set forth in any one of claims 1 to 3, further comprising:
address inputting means configured to accept an entry of another address different from the address,
the sender address setting means configured to set as the sender address of the data, the another address thus accepted by the address inputting means, instead of the address.

5. The transmitting device as set forth in claim 4, further comprising:
notifying means configured to notify the user when the sender address setting means sets, instead of the address, the another address for the sender address of the data.

6. The transmitting device as set forth in claim 4, further comprising:
address recording means configured to associate the another address with the recipient address, when the sender address setting means sets, instead of the address, the another address for the sender address of the data.

7. The transmitting device as set forth in claim 1, wherein:
if the recipient address inputting means accepts entries of a plurality of the recipient addresses,
the sender address setting means sets as the sender addresses, the addresses associated with the recipient addresses in advance, with respect to each of the recipient addresses.

8. The transmitting device as set forth in claim 1, wherein:
if the recipient address inputting means accepts entries of a plurality of the recipient addresses,
the sender address setting means sets, uniformly as the sender addresses of the data that are to be transmitted to the recipient addresses, any one of the addresses associated with the recipient addresses in advance.

9. The transmitting device as set forth in claim 1, wherein:
if no sender address is associated with the entered recipient address in advance,
the sender address setting means sets as the sender address, a predetermined sender address that is set as a default sender address in advance.

10. The transmitting device as set forth in claim 1, wherein:
if no sender address is associated with the entered transmission destination address in advance,
the sender address setting means sets as the sender address of the data, a sender address that was set to data that were previously transmitted to the recipient address.

11. The transmitting device as set forth in claim 1, further comprising:
network connection setting means configured to set a network connection of the transmitting device, according to setting information on a network connection, which setting information is associated with the recipient address in advance.

12. The transmitting device as set forth in claim 1, further comprising:
network connection setting means configured to set a network connection of the transmitting device, according to setting information on a network connection, which setting information is associated with the sender address in advance.

13. The transmitting device as set forth in claim 1, further comprising:
transmission history displaying means configured to display a data transmission history,
the transmission history displaying means being capable of varying display manners of the data transmission histories per sender address.

14. The transmitting device as set forth in claim 1, further comprising:
signature putting means configured to put a signature into the data when the data are to be transmitted, the signature being associated with the sender mail address.

15. The transmitting device as set forth in claim 1, further comprising:
password entry requiring means configured to prompt a user to enter a password, when the recipient address inputting means accepts the entry of the recipient address,
which password (i) is associated with the address being set as the sender address and (ii) identifies a right to use the address.

16. The transmitting device as set forth in claim 1, further comprising:
recipient address displaying means configured to display the recipient address,
the recipient address displaying means being capable of varying display manners of the recipient addresses per sender address associated with the recipient addresses.

17. A transmitting and receiving device, comprising a transmitting device as set forth in claim 1; and receiving data to which the sender address is set as a destination.

18. The transmitting and receiving device as set forth in claim 17, further comprising:
informing means configured to inform data reception,
the informing means being capable of varying informing manners per sender address designated as a destination of received data.

19. The transmitting and receiving device as set forth in claim 17, further comprising:
reception history displaying means configured to display a data reception history,
the reception history displaying means being capable of varying display manners of the data reception histories per sender address designated as a destination of received data.

20. The transmitting and receiving device as set forth in claim 17, further comprising:
reception data transferring means configured to transfer the received data to a storing region that is associated, in advance, with the sender address designated as the destination of the received data.

21. A transmitting and receiving device that includes a transmitting device as set forth in claim 1 and receives via a mail server, data to which a sender address is designated as a destination, comprising:
receiving means configured to (i) access to the mail server at intervals predetermined for the sender address designated as the destination, and to (ii) carry out the data reception process to receive the data transmitted to the transmitting and receiving device.

22. A mobile terminal device, comprising:
a transmitting device as set forth in claim 1.

23. A transmitting method configured to transmit data to a recipient address entered, comprising the steps of:
accepting the recipient address; and
setting as a sender address of the data, an address that is associated, in advance, with the recipient address thus accepted by the recipient address inputting means.

24. A transmission program configured to operate a transmitting device as set forth in any one of claims 1 to 16, causing a computer to function as each of the means.

25. A transmission and reception program configured to operate a transmitting and receiving device as set forth in any one of claims 17 to 21, causing a computer to function as each of the means.

26. A computer-readable recording medium, in which a transmission program as set forth in claim 24 or a transmission and reception program as set forth in claim 25 is stored.

## Amended claims

### Amended claims under Art. 19.1 PCT

**1.** (Amended) A transmitting device configured to transmit data to a recipient address entered in the transmitting device, comprising:
recipient address inputting means configured to accept an entry of the recipient address; and
sender address setting means configured to set as a sender address of the data, an address directly associated, in advance, with the recipient address thus accepted by the recipient address inputting means.

**2.** The transmitting device as set forth in claim 1, wherein:
at least one piece of information on a day of the week, a date, and a clock time is associated with the addresses; and
the sender address setting means is configured to (i) select an address associated to the at least one piece of information on a day of the week, a date, and a clock time on/at which the recipient address is designated, out of the addresses associated, in advance, with the recipient address accepted by the recipient address inputting means; and to (ii) set as the sender address, the address thus selected.

**3.** The transmitting device as set forth in claim 1, wherein:
the sender address setting means is configured to (i) select an address in association with a location in which the transmitting device accepts the designation of the recipient address, out of the addresses associated with recipient address according to positional information; and to (ii) set as the sender address, the address thus selected.

**4.** The transmitting device as set forth in any one of claims 1 to 3, further comprising:
address inputting means configured to accept an entry of another address different from the address,
the sender address setting means configured to set as the sender address of the data, the another address thus accepted by the address inputting means, instead of the address.

**5.** The transmitting device as set forth in claim 4, further comprising:
notifying means configured to notify the user when the sender address setting means sets, instead of the address, the another address for the sender address of the data.

**6.** The transmitting device as set forth in claim 4, further comprising:
address recording means configured to associate the another address with the recipient address, when the sender address setting means sets, instead of the address, the another address for the sender address of the data.

**7.** The transmitting device as set forth in claim 1, wherein:
if the recipient address inputting means accepts entries of a plurality of the recipient addresses,
the sender address setting means sets as the sender addresses, the addresses associated with the recipient addresses in advance, with respect to each of the recipient addresses.

**8.** The transmitting device as set forth in claim 1, wherein:
if the recipient address inputting means accepts entries of a plurality of the recipient addresses,
the sender address setting means sets, uniformly as the sender addresses of the data that are to be transmitted to the recipient addresses, any one of the addresses associated with the recipient addresses in advance.

**9.** The transmitting device as set forth in claim 1, wherein:
if no sender address is associated with the entered recipient address in advance,
the sender address setting means sets as the sender address, a predetermined sender address that is set as a default sender address in advance.

**10.** The transmitting device as set forth in claim 1, wherein:
if no sender address is associated with the entered transmission destination address in advance,
the sender address setting means sets as the sender address of the data, a sender address that was set to data that were previously transmitted to the recipient address.

**11.** The transmitting device as set forth in claim 1, further comprising:
network connection setting means configured to set a network connection of the transmitting device, according to setting information on a network connection, which setting information is associated with the recipient address in advance.

**12.** The transmitting device as set forth in claim 1, further comprising:
network connection setting means configured to set a network connection of the transmitting device, according to setting information on a network connection, which setting information is associated with the sender address in advance.

**13.** The transmitting device as set forth in claim 1, further comprising:
transmission history displaying means configured to display a data transmission history,
the transmission history displaying means being capable of varying display manners of the data transmission histories per sender address.

**14.** The transmitting device as set forth in claim 1, further comprising:
signature putting means configured to put a signature into the data when the data are to be transmitted, the signature being associated with the sender mail address.

**15.** The transmitting device as set forth in claim 1, further comprising:
password entry requiring means configured to prompt a user to enter a password, when the recipient address inputting means accepts the entry of the recipient address,
which password (i) is associated with the address being set as the sender address and (ii) identifies a right to use the address.

**16.** The transmitting device as set forth in claim 1, further comprising:
recipient address displaying means configured to display the recipient address,
the recipient address displaying means being capable of varying display manners of the recipient addresses per sender address associated with the recipient addresses.

**17.** A transmitting and receiving device, comprising a transmitting device as set forth in claim 1; and receiving data to which the sender address is set as a destination.

**18.** The transmitting and receiving device as set forth in claim 17, further comprising:
informing means configured to inform data reception,
the informing means being capable of varying informing manners per sender address designated as a destination of received data.

**19.** The transmitting and receiving device as set forth in claim 17, further comprising:
reception history displaying means configured to display a data reception history,
the reception history displaying means being capable of varying display manners of the data reception histories per sender address designated as a destination of received data.

**20.** The transmitting and receiving device as set forth in claim 17, further comprising:
reception data transferring means configured to transfer the received data to a storing region that is associated, in advance, with the sender address designated as the destination of the received data.

**21.** A transmitting and receiving device that includes a transmitting device as set forth in claim 1 and receives via a mail server, data to which a sender address is designated as a destination, comprising:
receiving means configured to (i) access to the mail server at intervals predetermined for the sender address designated as the destination, and to (ii) carry out the data reception process to receive the data transmitted to the transmitting and receiving device.

**22.** A mobile terminal device, comprising:
a transmitting device as set forth in claim 1.

**23.** (Amended) A transmitting method configured to transmit data to a recipient address entered, comprising the steps of:
accepting the recipient address; and
setting as a sender address of the data, an address that is directly associated, in advance, with the recipient address thus accepted by the recipient address inputting means.

**24.** A transmission program configured to operate a transmitting device as set forth in any one of claims 1 to 16, causing a computer to function as each of the means.

**25.** A transmission and reception program configured to operate a transmitting and receiving device as set forth in any one of claims 17 to 21, causing a computer to function as each of the means.

**26.** A computer-readable recording medium, in which a transmission program as set forth in claim 24 or a transmission and reception program as set forth in claim 25 is stored.

Statement under Art. 19.1 PCT
1. Contents of Amendment

In Claim 1, the recitation "an address associated, in advance, with the recipient address thus accepted by the recipient address inputting means" was amended so as to be recited as follows: "an address directly associated, in advance, with the recipient address thus accepted by the recipient address inputting means." The same amendment was also made in claim 23.

2. Explanation

The references cited in the international search do not disclose an arrangement in which a recipient mail address and a sender mail address are directly associated with each other as they are associated in the arrangement of the present invention. Thus, the present invention that includes the arrangement is different from the inventions disclosed in the cited references.
